# EUROPEAN PATENT SPECIFICATION

(11) **EP 4 273 095 B1**
(45) Date of publication and mention of the grant of the patent: **22.04.2026**
(21) Application number: 22922545.3
(22) Date of filing: 29.01.2022
(51) Int. Cl.: C01B 21/086, H01M 10/052, H01M 10/0568, C01B 21/093

(54) **METHOD FOR PREPARING LITHIUM BIS(FLUOROSULFONYL)IMIDE**
VERFAHREN ZUR HERSTELLUNG DAVON LITHIUM-BIS(FLUORSULFONYL)IMID
PROCÉDÉ DE PRÉPARATION BIS(FLUOROSULFONYL)IMIDE DE LITHIUM

(43) Date of publication of application: 08.11.2023
(73) Proprietor: Contemporary Amperex Technology Co., Limited, Ningde, Fujian 352100 (CN); Catl-Sicong Novel Materials Co., Ltd, Longyan City, Fujian 364204 (CN)
(72) Inventor: CHENG, Sicong, Longyan, Fujian 364204 (CN); HUANG, Qisen, Ningde, Fujian 352100 (CN)
(74) Representative: Gong, Jinping
(86) International application number: PCT/CN2022/074931
(87) International publication number: WO 2023/142023

(56) References cited:
- CN-A- 102 378 755
- CN-A- 102 378 755
- CN-A- 104 495 767
- CN-A- 110 436 424
- CN-A- 110 540 176
- CN-A- 111 620 315
- CN-A- 111 620 315
- CN-A- 112 919 435
- CN-A- 112 919 435

## Description

### TECHNICAL FIELD

The present application relates to a method for preparing lithium bis(fluorosulfonyl)imide as specified in any of claims 1-12.

### BACKGROUND

As lithium bis(fluorosulfonyl)imide (LiFSI) has a special molecular structure, it is possible to obtain higher conductivity by adding LiFSI to an electrolytic solution. Meanwhile, LiFSI also has the characteristics of high thermal stability, wide electrochemical window, and low corrosion rate, and can improve cycle performance and rate performance of power batteries especially in power batteries, and thus is an excellent choice for an electrolyte lithium salt of lithium ion batteries. CN 111620315A relates to a preparation method of lithium bis (fluorosulfonyl) imide. CN112919435A relates to a preparation method of high-purity bis(fluorosulfonyl)imide and alkali metal salt. CN 102378755A) relates to a method for producing a salt or a complex comprising imide and an organic base.

In the prior art, synthesis and purification of LiFSI have many problems in industrialized large-scale production. The synthesis process is cumbersome, long in time, low in product conversion rate, and large in consumption of raw and auxiliary materials and difficult for recycling, and therefore low in economy. The present invention aims to solve at least some of these problems, and proposes a new continuous method for producing LiFSI, so that LiFSI reaches battery-level standards in aspects of purity and water content, is low in production cost and less in three wastes, and is suitable for industrial production.

### SUMMARY

The present application is carried out in view of the above-mentioned problems, and its purpose is to provide a method for preparing lithium bis(fluorosulfonyl)imide in order to solve problems of low product purity, high moisture, high production cost and many three wastes in the preparation of LiFSI in the prior art.

In order to achieve the above purpose, the present application provides a method for preparing lithium bis(fluorosulfonyl)imide as specified in any of claims 1-12.

A first aspect of the present application provides a method for preparing lithium bis(fluorosulfonyl)imide as specified in any of claims 1-12, including the following steps:
(a) a synthesis step: subjecting sulfuryl fluoride, ammonia gas and triethylamine to reaction in a reaction kettle in the presence of a solvent to obtain a stream α1 containing (SO₂F-NH-SO₂F)·Et₃N, a triethylamine hydrogen fluoride salt and triethylamine;
(b) an evaporation step: performing evaporation on the stream α1 to obtain a stream α2 containing (SO₂F-NH-SO₂F)·Et₃N and the triethylamine hydrogen fluoride salt, performing post-treatment on the evaporated solvent and the triethylamine optionally, and then looping back to step (a);
(c) an extraction step: washing the stream α2 obtained in step (b) with water in an extraction tower or a static mixer to obtain an oil phase α3 containing (SO₂F-NH-SO₂F)·Et₃N and an aqueous phase α_{water} containing the triethylamine hydrogen fluoride salt, and separating out the oil phase α3;
(d) an alkalinization step: delivering the oil phase α3 obtained in step (c) to an evaporator to be mixed with a lithium hydroxide aqueous solution to obtain a mixture stream β1-1, and then performing reduced-pressure evaporation on the stream β1-1 to obtain a stream β1-2 containing lithium bis(fluorosulfonyl)imide;
(e) a dehydration step: adding the stream β1-2 containing the lithium bis(fluorosulfonyl)imide and an ester solvent to an evaporator for evaporation to obtain a stream β2 containing lithium bis(fluorosulfonyl)imide;
(f) a desolventization step: adding the stream β2 obtained in step (e) and an ester solvent to an evaporator for evaporation to obtain crude lithium bis(fluorosulfonyl)imide β3; and
(g) a crystallization step: pumping the crude lithium bis(fluorosulfonyl)imide β3 obtained in step (f) to a crystallization kettle, and adding dichloromethane to precipitate lithium bis(fluorosulfonyl)imide crystals.

By applying the preparation method of the present application, LiFSI with high purity and low moisture can be obtained. And the preparation method can be used for continuous production with low production costs and less three wastes, and has high industrial application value.

In any embodiment, optionally, the method further includes the following step:
(h) a drying step: purging with an inert gas the lithium bis(fluorosulfonyl)imide crystals precipitated in step (g) in a drier, to obtain powered lithium bis(fluorosulfonyl)imide crystals with a water content lower than 50 ppm.

In any embodiment, optionally, in step (a), a molar ratio of the sulfuryl fluoride: the ammonia gas: the triethylamine is (1.5-3.5):1:(1-6), optionally (2-3):1:(1-5).

In any embodiment, optionally, in step (a), the solvent is selected from acetonitrile, propionitrile, isopropionitrile, diethyl ether, propyl ether, isopropyl ether, tetrahydrofuran, acetone, butanone, methyl isobutyl ketone, methyl pyrrolidone or a mixture of any two or more thereof, preferably, acetonitrile.

In any embodiment, optionally, in step (a), reaction temperature of the reaction is not higher than 25°C, optionally 3°C-20°C; and/or, reaction pressure of the reaction is not higher than 0.4 MPa, optionally not higher than 0.25 MPa.

In any embodiment, optionally, between step (a) and step (b), the method further includes a step of filtering the stream α1 to remove a by-product sulfonamide (NH₂-SO₂-NH₂) solid, for example, performing filtration by using a tetrafluoro filter bag with a pore diameter of 5 µm to 20 µm.

In any embodiment, optionally, in step (b), the stream α1 is evaporated by using a falling film evaporator.

In any embodiment, optionally, in step (c), the aqueous phase containing the triethylamine hydrogen fluoride salt is delivered for recycling treatment, and triethylamine obtained after the aqueous phase is subjected to alkalinization and purification treatment is recyclable.

In any embodiment, optionally, in step (d), the oil phase α3 is mixed and stirred with the lithium hydroxide aqueous solution for reaction for 0.5-3 hours, optionally 1-2 hours.

In any embodiment, optionally, in step (d), a condensate obtained by evaporating the stream β1-1 is subjected to standing liquid separation, an upper layer liquid is a triethylamine aqueous solution, and the upper layer liquid is delivered for recycling treatment; and a lower layer liquid is condensed water, and the lower layer liquid is recycled to prepare the lithium hydroxide aqueous solution required for the alkalinization step.

In any embodiment, optionally, in step (d), a volume ratio of the stream α3 to the lithium hydroxide aqueous solution is optionally (0.8-5):1, optionally (1-1.2):1.

In any embodiment, optionally, in step (e) and step (f), an aqueous solution of the ester solvent obtained by condensation is delivered for recycling treatment.

In any embodiment, optionally, in step (e), the obtained stream β2 contains 0.1 vol% to 2 vol% of the water and the 20 vol% to 40 vol% of the ester solvent.

In any embodiment, optionally, the crude lithium bis(fluorosulfonyl)imide β3 obtained in step (f) has a water content of 2000 ppm to 4000 ppm, preferably a water content of 3000 ppm.

In any embodiment, optionally, step (e) and step (f) are performed in a same evaporator, or step (e) and step (f) are performed in different evaporators.

In any embodiment, optionally, during step (d) and step (e), a following side reaction takes place:

(SO₂F-N-SO₂F)Li⁺+4LiOH→NH₂SO₃Li+Li₂SO₄+2LiF+H₂O,

and a by-product lithium compound is removed by centrifugation and filtration before the desolventization step (f), optionally by a scraper centrifuge or a disc centrifuge.

In any embodiment, optionally, in step (e) and step (f), the ester solvent is independently selected from an organic solvent that has a boiling point greater than 70°C, preferably greater than 80°C, and preferably 100°C-130°C and is insoluble in water. Optionally, the ester solvent contains a carbonate solvent including ethylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate or a mixture of two or more thereof. Optionally, the ester solvent contains a carboxylate solvent such as propyl acetate, methyl propionate, ethyl propionate, propyl propionate, methyl butyrate, ethyl butyrate or a mixture of two or more. And further optionally, the ester solvent is selected from at least one of ethyl methyl carbonate, dimethyl carbonate or diethyl carbonate.

In any embodiment, optionally, temperature of the evaporation in the alkalinization step (d) is controlled to be 30°C-40°C, optionally 30°C-35°C; and/or, temperature of the evaporation in the dehydration step (e) is controlled to be 40°C-55°C, optionally 45°C-50°C; and/or, temperature of the evaporation in the desolventization step (f) is controlled to be 60°C-80°C, optionally 65°C-75°C.

In any embodiment, optionally, in step (d), step (e) and step (f), the lithium hydroxide aqueous solution is added so that a pH of the mixture in the evaporator is maintained in a range of 7-9, preferably a range of 8-9.

In any embodiment, optionally, in step (d), step (e) and step (f), a concentration of the lithium hydroxide aqueous solution is 1 mol/L to 15 mol/L, optionally 2 mol/L to 10 mol/L.

In any embodiment, between step (g) and step (h), the method includes pumping a stream containing the ester solvent, the dichloromethane and the lithium bis(fluorosulfonyl)imide crystals obtained through the crystallization step (g) into a two-in-one device with filtering and washing functions, where a crystallization liquid containing diethyl carbonate and dichloromethane is delivered for recovery treatment, and the remaining lithium bis(fluorosulfonyl)imide crystals fall into a drying kettle on the lower layer of the two-in-one device by gravity.

In any embodiment, optionally, in step (h), a liquid phase obtained after drying and condensation comprises dichloromethane and water, and the liquid phase is recycled and delivered to the crystallization step (g).

In any embodiment, optionally, a water content of the dichloromethane used in the crystallization step (g) is ≤200 ppm.

In any embodiment, optionally, the method further comprises (i) a canning step after the drying step (h), where after dissolution with a solvent and optionally acid removal, water removal and filtration, the powered lithium bis(fluorosulfonyl)imide crystals obtained in step (h) meet the following criteria: HF is ≤50 µg/g, and a water content is ≤20 µg/g.

In any embodiment, optionally, the solvent used in the dissolution in step (i) is the same as the ester solvents used in step (e) and step (f).

In a non-claimed aspect, the present application further provides lithium bis(fluorosulfonyl)imide prepared by the method according to the first aspect of the present application.

In a non-claimed aspect, the present application further provides an electrolytic solution including the lithium bis(fluorosulfonyl)imide prepared by the method according to the first aspect of the present application.

In a non-claimed aspect, the present application further provides a secondary battery including the electrolytic solution according to the third aspect of the present application.

The electrolytic solution or the secondary battery of the non-claimed aspect of the present application includes the lithium bis(fluorosulfonyl)imide prepared according to the first aspect of the present application, and therefore has at least the same advantages as the method described in the first aspect of the present application.

### BRIEF DESCRIPTION OF THE DRAWINGS

FIG. 1 shows a schematic flow chart of an α-stage process (synthesis-evaporation-extraction), in which an extraction tower is used in an extraction process.
FIG. 2 shows a schematic flow chart of an α-stage process (synthesis-evaporation-extraction), in which a static mixer is used in an extraction process.
FIG. 3 is a schematic flow chart of a β-stage process (alkalinization-dehydration-desolventization).
FIG. 4 is a schematic flow chart of a crystallization and drying process.
FIG. 5 is a schematic flow chart of a canning process.

### DESCRIPTION OF EMBODIMENTS

Hereinafter, embodiments specifically disclosing a method for preparing lithium bis(fluorosulfonyl)imide of the present application will be described in detail with reference to drawings as appropriate. However, unnecessarily detailed descriptions may be omitted in some cases. For example, detailed description for a well-known matter and repeated description for a practically identical structure are omitted. This is done to avoid unnecessarily redundant descriptions for ease of understanding by persons skilled in the art. In addition, the drawings and the following description are provided for persons skilled in the art to fully appreciate the present application, and are not intended to limit the subject matters described in the claims.

A "range" disclosed herein is defined in the form of a lower limit and an upper limit. A given range is defined by selecting a lower limit and an upper limit, and the selected lower limit and upper limit define boundaries of a particular range. The range defined in this manner may or may not include end values, and may be combined arbitrarily, that is, any lower limit may be combined with any upper limit to form a range. For example, if ranges of 60-120 and 80-110 are listed for a particular parameter, it is understood that ranges of 60-110 and 80-120 are also anticipated. In addition, if the minimum range values listed are 1 and 2, and the maximum range values listed are 3, 4 and 5, all the following ranges can be anticipated: 1-3, 1-4, 1-5, 2-3, 2-4, and 2-5. In the present application, unless otherwise specified, a numerical range "a-b" represents an abbreviated representation of any combination of real numbers between a and b, where both a and b are real numbers. For example, a numerical range "0-5" means that all real numbers between "0-5" have been listed herein, and "0-5" is just an abbreviated representation of a combination of these numerical values. In addition, when a certain parameter is expressed as an integer ≥2, it is equivalent to disclosing that the parameter is, for example, an integer 2, 3, 4, 5, 6, 7, 8, 9, 10, 11, 12, or the like.

Unless otherwise specified, all embodiments and optional embodiments of the present application may be combined with each other to form a new technical solution.

Unless otherwise specified, all technical features and optional technical features of the present application may be combined with each other to form a new technical solution.

Unless otherwise specified, all steps of the present application may be performed sequentially or randomly, but preferably, performed sequentially. For example, a method includes steps (a) and (b), which means that the method may include steps (a) and (b) performed sequentially, or steps (b) and (a) performed sequentially. For example, the method mentioned may further include step (c), which means that step (c) may be added to the method in any order, for example, the method may include steps (a), (b) and (c), steps (a), (c) and (b), steps (c), (a) and (b), or the like.

Unless otherwise specified, words "comprising" and "containing" mentioned in the present application are open-ended or closed-ended. For example, the words "comprising" and "containing" may mean that other components that are not listed may further be comprised or contained, or only listed components may be comprised or contained.

The terms "more than" and "less than" used in the present application include the number at the endpoint, for example, "more than one" refers to one or more, and "more than one of A and B" refers to "A", "B" or "A and B".

In the present application, unless otherwise specified, the term "or" is inclusive. For example, the phrase "A or B" means "A, B or both A and B". More particularly, a condition "A or B" is satisfied by any one of the following: A is true (or present) and B is false (or not present); A is false (or not present) and B is true (or present); or both A and B are true (or present).

Unless otherwise specified, content and percentage in the context of the present invention are both based on mass.

Process route of the present invention is: synthesis→evaporation→extraction→alkalinization→dehydration→desolventization→crystalliz ation→drying→canning (the canning step is an optional process). Each step will be further described below.

### [Synthesis step]

In the synthesis step (a) of the present invention, sulfuryl fluoride, ammonia gas and triethylamine are subjected to reaction in a reaction kettle in the presence of a solvent to obtain a stream α1 containing (SO₂F-NH-SO₂F)·Et₃N, a triethylamine hydrogen fluoride salt and triethylamine.

In some embodiments, in step (a), a molar ratio of the sulfuryl fluoride: the ammonia gas: the triethylamine is (1.5-3.5):1:(1-6), optionally (2-3):1:(1-5). In the present application, when the ammonia gas is excessive, a side reaction is likely to occur, which makes the reaction mixture turbid, and results in difficulty in subsequent filtration. Meanwhile, in order to make the color of materials lighter, it is necessary to avoid a long time contact between the sulfuryl fluoride and the triethylamine. Therefore, preferably, in step (a), acetonitrile and triethylamine are first added to the reaction device, and then a part of ammonia gas (preferably 2%-15% of the total amount of ammonia gas, preferably 3%-10%) is introduced, and finally ammonia gas and sulfuryl fluoride are introduced simultaneously for reaction.

In some embodiments, in step (a), the solvent is selected from acetonitrile, propionitrile, isopropionitrile, diethyl ether, propyl ether, isopropyl ether, tetrahydrofuran, acetone, butanone, methyl isobutyl ketone, methyl pyrrolidone or a mixture of any two or more thereof, preferably, acetonitrile.

In general, the reaction in (a) can be carried out in any suitable manner. For example, the reaction can be carried out in a batch reactor or in at least one semi-continuously operated reactor or at least one continuously operated reactor.

In some embodiments, in step (a), reaction temperature of the reaction is not higher than 25°C, optionally 3°C-20°C; and/or, reaction pressure of the reaction is not higher than 0.4 MPa, optionally not higher than 0.25 MPa. Excessive temperature and pressure will lead to more side reactions. In addition, if the temperature is too high, the solvent will easily vaporize, which results in excessive pressure in the reaction kettle and affects safe production.

The inventors of the present invention have found that when a molar ratio of the sulfuryl fluoride to the ammonia gas in step (a) is (1.5-4):1, preferably (2-3): 1, particularly good yield and chroma are obtained.

In some embodiments, in step (a), at the end of the reaction, the stream α1 containing 30 wt% to 50 wt% of (SO₂F-NH-SO₂F)·Et₃N, 15 wt% to 30 wt% of the triethylamine hydrogen fluoride salt and 0 wt% to 10 wt% of the triethylamine is obtained.

In some embodiments, the stream α1 may be filtered more than once, preferably 2-5 times, optionally 2 times, and a pore diameter of a filter bag used for downstream filtration is smaller than that of an upstream filter bag.

### [Evaporation step]

In the evaporation step (b) of the present invention, the stream α1 is evaporated to obtain a stream α2 containing (SO₂F-NH-SO₂F)·Et₃N and the triethylamine hydrogen fluoride salt, post-treatment is performed on the evaporated solvent and the triethylamine optionally, and then the method loops back to step (a).

In some embodiments, a step of filtering the stream α1 is further included between step (a) and step (b) to remove a by-product sulfonamide (NH₂-SO₂-NH₂) solid, for example, performing filtration by using a tetrafluoro filter bag with a pore diameter of 5 µm to 20 µm, optionally 6 µm to 15 µm.

In some embodiments, in step (b), the stream α1 is evaporated by using a falling film evaporator. A heat exchange medium used in the falling film evaporator may be hot water, and temperature of a hot water bucket is 50°C to 100°C, preferably 60°C to 80°C.

In some embodiments, in step (b), the evaporation may be performed by using one or two or more evaporators connected in series, preferably a falling film evaporator.

In some embodiments, in step (b), the gas stream evaporated by the evaporator is condensed by using a condenser, preferably a condenser including a pre-condenser and a post-condenser, the pre-condenser is condensed with water at 0°C, and the post-condenser is condensed with water at -15°C. Optionally, internal pressure of the evaporator is -0.01MPa to -0.1MPa. Herein, those skilled in the art can understand that the water used in the condenser contains 30-50 wt% of antifreeze, and the antifreeze may be ethylene glycol or glycerin.

In some embodiments, the evaporation in step (b) is able to be performed in one or more evaporators.

In some embodiments, in step (b), the stream α2 includes 60 wt% to 80 wt% of (SO₂F-NH-SO₂F)·Et₃N and 20 wt% to 40 wt% of the triethylamine hydrogen fluoride salt.

### [Extraction step]

In the extraction step (c) of the present invention, the stream α2 obtained in step (b) is washed with water in an extraction tower or a static mixer to obtain an oil phase α3 containing (SO₂F-NH-SO₂F)·Et₃N and an aqueous phase α_{water} containing the triethylamine hydrogen fluoride salt, and the oil phase α3 is separated out.

In some embodiments, in step (c), a mass ratio of the water and the stream α2 that enter the extraction tower or the static mixer is 1:(1-2), optionally 1:(1.1-1.5).

In some embodiments, in step (c), the oil phase α3 further includes 5 wt% to 15 wt% of water.

In some embodiments, in step (c), the α_{water} includes 75 wt% to 80 wt% of water and 20 wt% to 25 wt% of the triethylamine hydrogen fluoride salt.

In some embodiments, in step (c), the aqueous phase containing the triethylamine hydrogen fluoride salt is delivered for recycling treatment, and triethylamine obtained after the aqueous phase is subjected to alkalinization and purification treatment is recyclable. In addition to the triethylamine hydrogen fluoride salt, the aqueous phase also contains an impurity ion (such as F⁻, SO₄²⁻, FSO₃⁻ or Cl⁻). After the alkalinization and purification treatment in a recycling section, the triethylamine is recyclable, and additional economic benefits can be generated by KF sales.

In the present application, the extraction tower may be an extraction tower conventionally used in the art, such as a packed extraction tower, a sieve tray extraction tower, a rotating disc extraction tower, a vibrating sieve tray tower, a multistage centrifugal extraction tower, preferably a rotating disc extraction tower.

In some embodiments, the extraction step is carried out in an extraction tower (stirring frequency is 15±1 HZ; a weight ratio of deionized water used to α2 therein is 1:(1-1.6), preferably 1:(1-1.4)). A light phase (low density) enters from the bottom of the side of the extraction tower and is discharged from the top of the extraction tower; and a heavy phase enters from the top of the side of the extraction tower and is discharged from the bottom of the extraction tower, and the middle is stirred in a spiral shape (stirring effect is better, and washing and separation conditions are more superior). Unexpectedly, the inventors find that using the extraction tower for extraction can achieve better separation of an impurity ion (such as F⁻). After treatment by the static mixer, an F ion content in α3 is ≥1000 ppm, and more LiOH needs to be consumed in the following alkalinization process; however, after treatment by the extraction tower, the F ion content in α3 is ≤100 ppm.

In the present application, measuring an F ion content and a water content in a stream is a method well known in the art, for example, measuring an F ion content by alizarin complex colorimetry, and measuring a water content by a Karl Fischer method.

In some embodiments, in step (c), the stream α2 obtained in step (b) is washed with water in the extraction tower.

In the present application, the static mixer may be a static mixer conventionally used in the art, such as a pipeline static mixer. In the case of using a static mixer, the resulting mixture needs to be pumped into a layering tank for standing layering, which usually lasts for 1-10 hours, preferably 2-6 hours.

In the present application, unless otherwise specified, the water used in the text is always deionized water, which can reduce the type and content of impurity contained in a final product to the largest extent.

### [Alkalinization step]

In the alkalinization step (d) of the present invention, the oil phase α3 obtained in step (c) is delivered to an evaporator to be mixed with a lithium hydroxide aqueous solution to obtain a mixture stream β1-1, and then the stream β1-1 is evaporated under reduced pressure to obtain a stream β1-2 containing lithium bis(fluorosulfonyl)imide.

In some embodiments, the alkalinization of step (d) is carried out according to the following reaction formula:

(SO₂F-NH-SO₂F)·Et₃N+LiOH→(SO₂F-N-SO₂F)⁻Li⁺ (LiFSI)+Et₃N+H₂O.

The principle of the reaction is that a strong base replaces a weak base, and the alkalinity of LiOH is higher than that of triethylamine in (SO₂F-NH-SO₂F)·Et₃N, so that the triethylamine is replaced and the triethylamine is removed through falling film evaporation, and at the same time LiOH reacts with (SO₂F-NH-SO₂F)·Et₃N to generate lithium bis(fluorosulfonyl)imide (which is abbreviated as LiFSI).

In some embodiments, in step (d), before evaporating the stream β1-1, the oil phase α3 is mixed and stirred with the lithium hydroxide aqueous solution for reaction for 0.5-3 hours, optionally 1-2 hours.

In some embodiments, in step (d), a concentration of the lithium hydroxide aqueous solution is 1 mol/L to 15 mol/L, optionally 2 mol/L to 10 mol/L.

In some embodiments, in step (d), a condensate obtained by evaporating the stream β1-1 is subjected to standing liquid separation, an upper layer liquid is a triethylamine aqueous solution, and the upper layer liquid is delivered for recycling treatment; and a lower layer liquid is condensed water, and the lower layer liquid is recycled to prepare the lithium hydroxide aqueous solution required for the alkalinization step.

In some embodiments, in step (d), a volume ratio of the oil phase α3 to the lithium hydroxide aqueous solution is (0.8-5):1, optionally (1-1.2):1.

In some embodiments, in step (d), the lithium hydroxide aqueous solution is added so that a pH of the mixture in the evaporator is maintained in a range of 7-9, preferably a range of 8-9.

In some embodiments, in step (d), the evaporation is performed by using a falling film evaporator, and temperature of the evaporation is controlled to be 30°C-40°C, optionally 30°C-35°C.

In some embodiments, the evaporation in step (d) is able to be performed in one or more evaporators.

In some embodiments, in step (d), the stream β1-2 includes 70 wt% to 90 wt% of lithium bis(fluorosulfonyl)imide and 5 wt% to 25 wt% of water, and the balance is LiF, Li₂SO₄ and lithium sulfamate, etc., based on 100 wt% of stream β1-2.

### [Dehydration step]

In the dehydration step (e) of the present invention, the stream β1-2 containing the lithium bis(fluorosulfonyl)imide and an ester solvent are added to an evaporator for evaporation to obtain a stream β2 containing lithium bis(fluorosulfonyl)imide.

In some embodiments, in step (e), an aqueous solution of the ester solvent obtained by condensation is delivered for recycling treatment.

In some embodiments, in step (e), the stream β1-2 is mixed with the ester solvent at a volume ratio of 1:(0.4-0.8), preferably 1:(0.5-0.7).

In some embodiments, in step (e), the obtained stream β2 further contains 0.1 vol% to 2 vol% of the water and 20 vol% to 40 vol% of the ester solvent.

In some embodiments, in step (e), the evaporator is a falling film evaporator, and temperature of the evaporation is controlled to be 40°C-55°C, optionally 45°C-50°C.

In some embodiments, the evaporation in step (e) is able to be performed in one or more evaporators.

Since lithium salts have strong hygroscopicity, it is difficult to reduce the moisture to the required level by evaporation alone. For example, adsorption of lithium salts to water can be weakened by adding a large amount of ester organic solvents (such as carbonates and carboxylates, preferably DEC and EMC) that are insoluble in water and have a boiling point preferably greater than water (such as 100-130°C), so evaporation and dehydration while adding the ester organic solvents can reduce the moisture to the required content, for example, less than 3000 ppm. A mixture of ester organic solvents and water obtained by condensation is recyclable after purification treatment in the recycling section.

In some embodiments, optionally, during step (d) and step (e), a following side reaction takes place:

(SO₂F-N-SO₂F)⁻Li⁺+4LiOH→NH₂SO₃Li+Li₂SO₄+2LiF+H₂O.

Before a desolventization step (f), a by-product lithium compound (such as NH₂SO₃Li, Li₂SO₄ and 2LiF) is optionally removed by centrifugation and filtration, such as by a scraper centrifuge or a disc centrifuge.

In some embodiments, an ester solvent is mixed with the stream β1-2, and a pH of the mixture is maintained at 7-9 while evaporation and dehydration are performed, and optionally centrifugation and filtration are performed to obtain a stream β2 containing 60 wt% to 80 wt% of lithium bis(fluorosulfonyl)imide, 20 wt% to 40 wt% of the ester solvent and 0.2 wt% to 1.5 wt% of water.

In some embodiments, in step (e), a pH of the mixture is maintained at 7-9, preferably 8-9 by adding the lithium hydroxide aqueous solution during the evaporation.

In some embodiments, in step (e), a concentration of the lithium hydroxide aqueous solution is 1 mol/L to 15 mol/L, optionally 2 mol/L to 10 mol/L.

### [Desolventization step]

In the desolventization step (f) of the present invention, the stream β2 obtained in step (e) and an ester solvent are added to an evaporator for evaporation to obtain crude lithium bis(fluorosulfonyl)imide β3.

In some embodiments, after the dehydration step (e) and before the desolventization step (f), a by-product lithium compound (such as NH₂SO₃Li, Li₂SO₄ and LiF) is optionally removed by centrifugation and filtration, such as by a scraper centrifuge or a disc centrifuge, so as to obtain a stream β2-1.

In some embodiments, in step (f), the stream β2 or the stream β2-1 is mixed with an ester solvent at a volume ratio of 1:(0.1-0.4), preferably 1:(0.2-0.3).

In some embodiments, in step (f), the evaporator is a scraper evaporator, and temperature of the evaporation is controlled to be 60-80°C, optionally 65-75°C.

In some embodiments, the evaporation in step (f) is able to be performed in one or more evaporators.

In some embodiments, the lithium bis(fluorosulfonyl)imide β3 obtained in step (f) has a water content of 2000 ppm to 4000 ppm, preferably a water content of 3000 ppm. By continuing to mix the stream β2 or the stream β2-1 obtained by filtration with the ester solvent in step (e), and then continuing to perform evaporation, the water in the stream β2 or the stream β2-1 can be further removed.

In some embodiments, in step (f), the lithium bis(fluorosulfonyl)imide β3 contains 80 wt% to 90 wt% of the lithium bis(fluorosulfonyl)imide and 10 wt% to 20 wt% of the ester solvent.

In some embodiments, in step (f), an aqueous solution of the ester solvent obtained by condensation is delivered for recycling treatment.

In the present application, during the alkalinization, dehydration and desolventization steps, a pH of the mixture is always required to be maintained in a range of 7-9, preferably 8-9. Preferably, by adding a solvent lithium hydroxide, a weak alkaline system is kept, and decomposition of a product is suppressed.

In some embodiments, a pH of the evaporated mixture is maintained in the range of 7-9, preferably 8-9 by adding the lithium hydroxide aqueous solution.

In some embodiments, in step (f), a concentration of the lithium hydroxide aqueous solution is 1 mol/L to 15 mol/L, optionally 2 mol/L to 10 mol/L.

Since a lithium salt is dissolved in an ester solvent such as diethyl carbonate, a certain amount of ester solvents are required to be evaporated and removed, otherwise crystallization cannot be implemented or crystallization rate can be very low in the later stage.

In some embodiments, optionally, step (e) and step (f) are performed in a same evaporator, or step (e) and step (f) are performed in different evaporators.

### [Crystallization step]

In the crystallization step (g) of the present invention, the crude lithium bis(fluorosulfonyl)imide β3 obtained in step (f) is pumped to a crystallization kettle, and dichloromethane is added to precipitate lithium bis(fluorosulfonyl)imide crystals.

In some embodiments, in the crystallization step (g), a water content of the dichloromethane used is ≤ 200 ppm. If the water content of dichloromethane is too high, it will affect the production of crystal nucleus of lithium bis(fluorosulfonyl)imide, and as a result, the crystals are too small and too thin, and are not easy to dry in the future.

In some embodiments, optionally, between step (g) and step (h), the method includes pumping a stream containing the ester solvent, the dichloromethane and the lithium bis(fluorosulfonyl)imide crystals obtained through the crystallization step (g) into a two-in-one device with filtering and washing functions, where a crystallization liquid containing diethyl carbonate and dichloromethane is delivered for recovery treatment, and the remaining lithium bis(fluorosulfonyl)imide crystals fall into a drying kettle on the lower layer of the two-in-one device by gravity.

### [Drying step]

In the drying step (h) of the present invention, the lithium bis(fluorosulfonyl)imide crystals precipitated in step (g) are purged with an inert gas in a drier, to obtain powered lithium bis(fluorosulfonyl)imide crystals with a water content lower than 50 ppm.

In some embodiments, in step (h), a liquid phase obtained after drying and condensation includes dichloromethane and water, and the liquid phase is recycled and delivered to the crystallization step (g).

### [Canning step]

The method of the present invention further includes (i) a canning step after the drying step (h), where after dissolution with a solvent and optionally acid removal, water removal and filtration, the powered lithium bis(fluorosulfonyl)imide crystals obtained in the drying step meet the following criteria: HF is ≤50 µg/g, and a water content is ≤20 µg/g.If the HF content in the dissolved solution is detected to exceed the limit (for example, HF >50 µg/g), lithium hydroxide is used for acid removal. If the water content in the dissolved solution is detected to exceed the limit (for example, water content >20 µg/g), a molecular sieve is used for water removal.

In some embodiments, the solvent used in the dissolution in step (i) is the same as the ester solvents used in step (e) and step (f).

A second non-claimed aspect of the present application further provides lithium bis(fluorosulfonyl)imide prepared by the method according to the first aspect of the present application.

A third non-claimed aspect of the present application further provides an electrolytic solution including the lithium bis(fluorosulfonyl)imide prepared by the method according to the first aspect of the present application.

A fourth non-claimed aspect of the present application further provides a secondary battery including the electrolytic solution according to the third aspect of the present application.

The electrolytic solution or the secondary battery of the present application includes the lithium bis(fluorosulfonyl)imide prepared according to the first aspect of the present application, and therefore has at least the same advantages as the method described in the first aspect of the present application.

Raw and auxiliary materials used in a LiFSI synthesis process route of the present invention are all relatively common chemical products. Production cost is low, there is no high temperature and high pressure in a reaction process, and exothermic heat of a front-end synthesis reaction is cooled by a refrigerator to ensure the reaction at low temperature and high safe coefficient of the reaction. As a result, LiFSI is low in the production cost, less in three wastes, high in purity, and the raw materials can be fully recycled for use, and a by-product can also be purified to generate additional economic benefits, which is suitable for industrial production. By recovering and recycling the raw materials, consumption of the raw and auxiliary materials is reduced, a utilization rate of the raw materials of reaction is improved, discharge and treatment costs of compounds are reduced, production costs are effectively reduced, and economic benefits are improved.

### EXAMPLES

Examples of the present application will be described hereinafter. The examples described below are exemplary and merely used to explain the present application, and may not be understood as limitation to the present application. Where specific techniques or conditions are not specified in the examples, they are performed according to techniques or conditions described in the literature in the art or according to product specifications. Reagents or instruments used without specifying the manufacturer are all commercially available conventional products.

### Example 1

### [Synthesis step-evaporation step→extraction step]

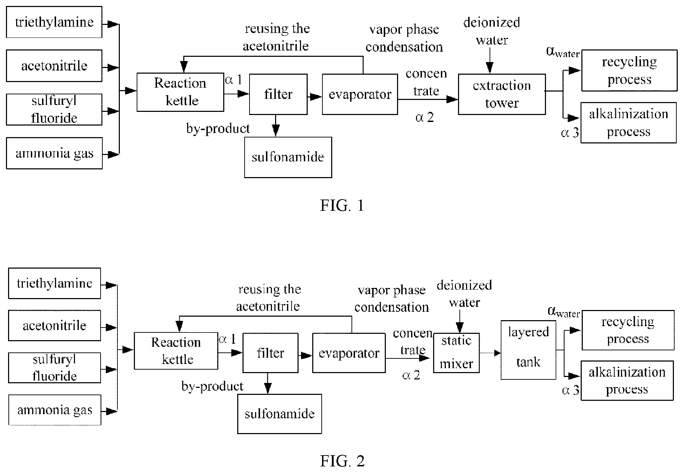

An α-stage process (synthesis-evaporation-extraction) is described with reference to FIG. 1, in which an extraction tower is used in an extraction process.

40 m³ of triethylamine and 35 m³ of acetonitrile were pumped into a synthesis kettle with a volume of 100 m³, temperature of the kettle was reduced to 15°C, then 120 kg of ammonia gas was first introduced, and finally ammonia gas (2000 kg) and sulfuryl fluoride (26000 kg) were introduced simultaneously, while pressure in the kettle was maintained at 0.3 MPa, and temperature in the kettle was maintained at 15°C. After reaction lasted for 4 h, pressure in the kettle was reduced to 0.1 MPa, and stirring was stopped. A reaction mixture stream α1 obtained (containing 40 wt% of (SO₂F-NH-SO₂F)·Et₃N, 18 wt% of triethylamine hydrogen fluoride salt and 6 wt% of triethylamine) was filtered through a tetrafluoro filter bag with a pore diameter of 5 µm to filter out a solid by-product sulfonamide. A filtrate was pumped into a falling film evaporator (a temperature of a hot water bucket was 75°C), and a solvent in the filtrate was evaporated under a vacuum degree of -0.02MPa (a front stage of a vacuum pump was condensed with water at 0°C, and a latter stage was condensed with water at -15°C) to obtain a stream α2 containing (SO₂F-NH-SO₂F)·Et₃N and the triethylamine hydrogen fluoride salt (containing 70 wt% of (SO₂F-NH-SO₂F)·Et₃N and 28 wt% of the triethylamine hydrogen fluoride salt) and a condensate containing acetonitrile. The condensate was recycled for synthesis in the synthesis kettle in the first step. The stream α2 was pumped to a rotary disc extraction tower (a stirring frequency is 15±1 Hz; and a flow rate was controlled so that a weight ratio of deionized water to α2 is 1: 1.2), and was fully mixed with deionized water in the extraction tower to obtain an aqueous phase α_{water} containing the triethylamine hydrogen fluoride salt as an upper layer liquid (containing 77 wt% of the water and 22 wt% of the triethylamine hydrogen fluoride salt), and an oil phase α3 containing (SO₂F-NH-SO₂F)·Et₃N as a lower layer liquid (also containing 15 wt% of the water). The upper aqueous phase was delivered to a recycling workshop for treatment, and the lower oil phase was delivered to an alkalinization step. Upon detection, the oil phase α3 also contained 100 ppm of F⁻.

### [Alkalinization step-dehydration step-desolventization step]

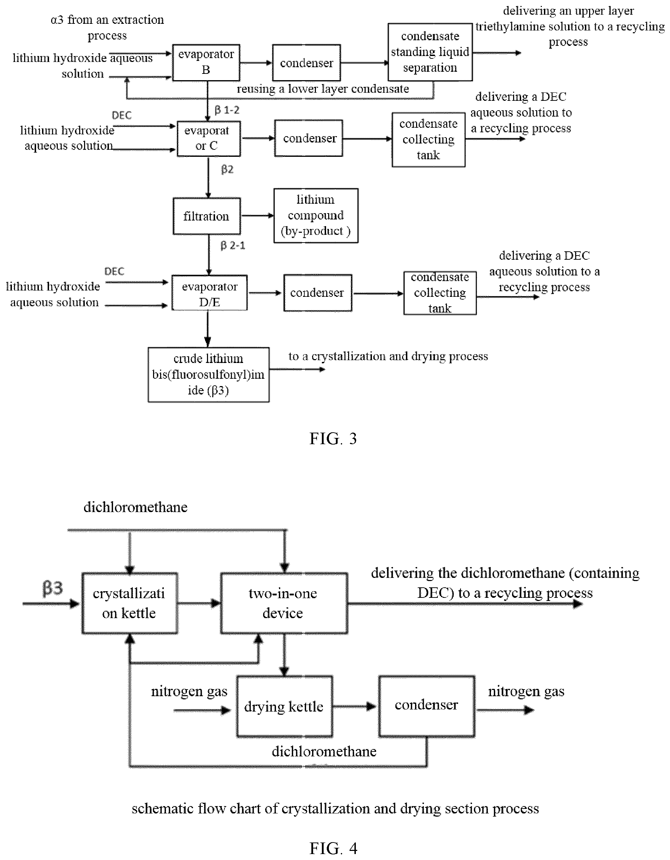

A β-stage process (alkalinization-dehydration-desolventization) is described with reference to FIG. 3.

The stream α3 was directly alkalinized in a falling film evaporator B (a steam heating temperature of a hot water bucket was 35°C), and a lithium hydroxide aqueous solution (with a concentration of 5 mol/L, where a volume ratio of the stream α3 to the lithium hydroxide aqueous solution is 1.1:1) was dropped while stirring was performed continuously. After the reaction lasted for 1 hour, a mixture stream β1-1 (a crude lithium salt) was obtained. At the same time, hot water at 35°C was used for heating, and vacuum was activated to keep the vacuum degree in the kettle at -0.08 MPa, and steaming time was 6 hours. The front and latter stages of the vacuum pump performed five-stage condensation with water at 25°C and 0°C respectively. The condensate was left for standing liquid separation, the upper layer was a triethylamine aqueous solution and pumped to the recycling workshop for recycling, and the lower layer was recovered for the alkalinization process to prepare the lithium hydroxide aqueous solution. After evaporation in the falling film evaporator B, a stream β1-2 containing lithium bis(fluorosulfonyl)imide (containing 85 wt% of the lithium bis(fluorosulfonyl)imide and 10 wt% of the water) was obtained. During the evaporation in the falling film evaporator B, a lithium hydroxide aqueous solution (with a concentration of 5 mol/L) was added to maintain a pH of the stream β1-2 at 8.

The stream β1-2 was continued to be evaporated in a falling film evaporator C (a steam heating temperature of a hot water bucket was 50°C). At the same time, diethyl carbonate (DEC) was metered and pumped (a flowmeter was controlled so that a volume ratio of DEC to the stream β1-2 was 0.6:1), vacuum (-0.08MPa) heating and evaporation were continued, and the front and latter stages of the vacuum pump performed five-stage condensation with water at normal temperature (25°C) and 0°C respectively, and the condensate was an aqueous solution containing DEC. The condensate was delivered to the recycling workshop for recycling. After evaporation in the falling film evaporator C, a stream β2 containing lithium bis(fluorosulfonyl)imide (containing 70 wt% of the lithium bis(fluorosulfonyl)imide, 29 wt% of diethyl carbonate and 1 wt% of the water) was obtained. During the evaporation in the falling film evaporator C, a lithium hydroxide aqueous solution (with a concentration of 5 mol/L) was metered and added to maintain a pH of the stream β2 at 8.

The stream β2 obtained after being evaporated by the falling film evaporator C was centrifuged and filtered through a disc centrifuge (with a rotation speed of 1500 rpm) to filter out a by-product lithium compound, so as to obtain a stream β2-1 containing 1 wt% of the water, 30 wt% of the diethyl carbonate and 69 wt% of the lithium bis(fluorosulfonyl)imide. The stream β2-1 was then pumped into a scraper evaporator D (a steam heating temperature of a hot water bucket was 75°C), and at the same time, diethyl carbonate (DEC) was metered and pumped (a flowmeter was controlled so that a volume ratio of DEC to the stream β2-1 was 0.25: 1), and vacuum (with a vacuum degree of -0.08MPa) heating, evaporation and dehydration were continued. A lithium hydroxide solution (with a concentration of 5 mol/L) was also added while evaporation was performed by a scraper evaporator D so that a pH of a stream β3 obtained was maintained at 8. A condensate mainly contained DEC and a small amount of water, and the condensate was delivered to the recycling workshop for recycling. After 6 hours of evaporation, lithium bis(fluorosulfonyl)imide β3 (containing 85 wt% of the lithium bis(fluorosulfonyl)imide and 15 wt% of the diethyl carbonate) with a water content of 3000 ppm was obtained.

### [Crystallization step→drying step]

A crystallization and drying process is described with reference to FIG. 4.

β3 was pumped to a crystallization kettle, and dichloromethane with a water content of 100 ppm was pumped at a speed of 20 L/h. After stirring and mixing, β3 and the dichloromethane were pumped into a two-in-one device with filtering and washing functions, where the dichloromethane (containing DEC) was delivered to a recycling workshop for recycling, and the remaining lithium bis(fluorosulfonyl)imide crystals falled into a drying kettle on the lower layer of the two-in-one device by gravity. Nitrogen gas was introduced in a drier to purge the crystals for drying, and drying temperature was 60°C. After drying and condensation, a condensate contained 99.5% dichloromethane and 0.5% water, and the condensate was delivered to a crystallization process for recycling. After the crystal water dropped to a target limit (50 ppm), the obtained powder product was delivered to a canning section.

Upon detection, purity of lithium bis(fluorosulfonyl)imide powder obtained after the drying step was 99.8%, and yield reached 92%, where a free acid content was 10 µg/g and a water content was 20 µg/g.

### [Canning step]

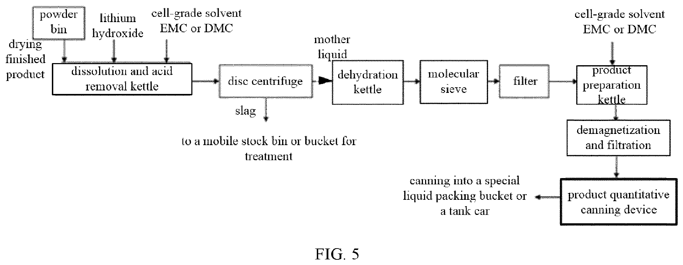

An optional canning process is described with reference to FIG. 5.

70 L of diethyl carbonate and 0.1 kg of lithium hydroxide were added to 30 kg of the lithium bis(fluorosulfonyl)imide powder obtained after crystallization and drying. Then a disc centrifuge was used to perform centrifugation (with a rotation speed of 1500 rpm) to remove a solid, then a filtrate was delivered to a dehydration kettle in which 20 kg of molecular sieves were added, for stirring at a rotation speed of 800 rpm and treatment for 2h. Then a filter was used to filter out the molecular sieves, and a filtrate obtained was delivered to a product preparation kettle. Finally, demagnetization (a vertical demagnetization filter, 8000 gauss) and filtration (through a 1 micron filter, a 0.5 micron filter, and a 0.1 micron filter, respectively) were performed to obtain a diethyl carbonate solution containing lithium bis(fluorosulfonyl)imide with a concentration of 28 wt% (HF is ≤50 µg/g, and a water content is ≤20 µg/g), and canning was performed finally.

Example 2: Technical solution of Example 2 is the same as that of Example 1, and differs in that in an extraction step, a static mixer is adopted in an extraction process (a ratio of length to pipe diameter L/D=10; and a flow is controlled so that a weight ratio of deionized water to α2 is 1: 1.2). As shown in FIG. 2, the stream α2 was pumped to a static mixer to be fully mixed with deionized water in the static mixer, and delivered to a layered tank for standing layering for 2 hours, to obtain an aqueous phase α_{water} containing a triethylamine hydrogen fluoride salt as an upper layer liquid and an oil phase α3 containing (SO₂F-NH-SO₂F)·Et₃N as a lower layer liquid, the upper layer aqueous phase was delivered to a recycling workshop for treatment, and the lower layer oil phase was delivered to an alkalinization step. Upon detection, the oil phase α3 contained 1000 ppm of F⁻.

Upon detection, purity of lithium bis(fluorosulfonyl)imide powder obtained after the drying step in Example 2 was 99.2%, and yield reached 89%, where a free acid content was 15 µg/g and a water content was 25 µg/g.

## Claims

1. A method for preparing lithium bis(fluorosulfonyl)imide, comprising the following steps:
(a) a synthesis step: subjecting sulfuryl fluoride, ammonia gas and triethylamine to reaction in a reaction kettle in the presence of a solvent to obtain a stream α1 containing (SO₂F-NH-SO₂F)·Et₃N, a triethylamine hydrogen fluoride salt and triethylamine;
(b) an evaporation step: performing evaporation on the stream α1 to obtain a stream α2 containing (SO₂F-NH-SO₂F)·Et₃N and the triethylamine hydrogen fluoride salt, performing post-treatment on the evaporated solvent and the triethylamine optionally, and then looping back to step (a);
(c) an extraction step: washing the stream α2 obtained in step (b) with water in an extraction tower or a static mixer to obtain an oil phase α3 containing (SO₂F-NH-SO₂F)·Et₃N and an aqueous phase α_{water} containing the triethylamine hydrogen fluoride salt, and separating out the oil phase α3;
(d) an alkalinization step: delivering the oil phase α3 obtained in step (c) to an evaporator to be mixed with a lithium hydroxide aqueous solution to obtain a mixture stream β1-1, and then performing reduced-pressure evaporation on the stream β1-1 to obtain a stream β1-2 containing lithium bis(fluorosulfonyl)imide;
(e) a dehydration step: adding the stream β1-2 containing the lithium bis(fluorosulfonyl)imide and an ester solvent to an evaporator for evaporation to obtain a stream β2 containing lithium bis(fluorosulfonyl)imide;
(f) a desolventization step: adding the stream β2 obtained in step (e) and an ester solvent to an evaporator for evaporation to obtain crude lithium bis(fluorosulfonyl)imide β3; and
(g) a crystallization step: pumping the crude lithium bis(fluorosulfonyl)imide β3 obtained in step (f) to a crystallization kettle, and adding dichloromethane to precipitate lithium bis(fluorosulfonyl)imide crystals.

2. The method according to claim 1, wherein the method further comprises the following step:
(h) a drying step: purging with an inert gas the lithium bis(fluorosulfonyl)imide crystals precipitated in step (g) in a drier, to obtain powered lithium bis(fluorosulfonyl)imide crystals with a water content lower than 50 ppm.

3. The method according to any one of claims 1 to 2, wherein in step (a), a molar ratio of the sulfuryl fluoride: the ammonia gas: the triethylamine is (1.5-3.5):1:(1-6), optionally (2-3):1:(1-5).

4. The method according to any one of claims 1 to 3, wherein in step (a), the solvent is selected from acetonitrile, propionitrile, isopropionitrile, diethyl ether, propyl ether, isopropyl ether, tetrahydrofuran, acetone, butanone, methyl isobutyl ketone, methyl pyrrolidone or a mixture of any two or more thereof, preferably, acetonitrile.

5. The method according to any one of claims 1 to 4, wherein in step (a), reaction temperature of the reaction is not higher than 25°C, optionally 3°C-20°C; and/or, reaction pressure of the reaction is not higher than 0.4 MPa, optionally not higher than 0.25 MPa.

6. The method according to any one of claims 1 to 5, wherein between step (a) and step (b), the method further comprises a step of filtering the stream α1 to remove a by-product sulfonamide solid, optionally, the step of filtering comprises performing filtration by using a tetrafluoro filter bag with a pore diameter of 5 µm to 20 µm;
and/or
wherein in step (b), the stream α1 is evaporated by using a falling film evaporator;
and/or
wherein in step (c), the aqueous phase α_{water} containing the triethylamine hydrogen fluoride salt is delivered for recycling treatment, and triethylamine obtained after the aqueous phase α_{water} is subjected to alkalinization and purification treatment is recyclable;
and/or
wherein in step (d), the oil phase α3 is mixed and stirred with the lithium hydroxide aqueous solution for reaction for 0.5-3 hours, optionally 1-2 hours;
and/or
wherein in step (d), a condensate obtained by evaporating the stream β1-1 is subjected to standing liquid separation, an upper layer liquid is a triethylamine aqueous solution, and the upper layer liquid is delivered for recycling treatment; and a lower layer liquid is condensed water, and the lower layer liquid is recycled to prepare the lithium hydroxide aqueous solution required for the alkalinization step.

7. The method according to any one of claims 1 to 6, wherein in step (d), a volume ratio of the oil phase α3 to the lithium hydroxide aqueous solution is (0.8-5):1, optionally (1-1.2):1;
and/or
wherein in step (e) and step (f), an aqueous solution of the ester solvent obtained by condensation is delivered for recycling treatment;
and/or
wherein in step (e), the obtained stream β2 contains 0.1 vol% to 2 vol% of the water and 20 vol% to 40 vol% of the ester solvent.

8. The method according to any one of claims 1 to 7, wherein the crude lithium bis(fluorosulfonyl)imide β3 obtained in step (f) has a water content of 2000 ppm to 4000 ppm, preferably a water content of 2300 ppm to 2800 ppm;
and/or
wherein step (e) and step (f) are performed in a same evaporator, or step (e) and step (f) are performed in different evaporators;
and/or
wherein during step (d) and step (e), a following side reaction takes place:
(SO₂F-N-SO₂F)⁻Li⁺+4LiOH→NH₂SO₃Li+Li₂SO₄+2LiF+H₂O,
and
a by-product lithium compound is removed by centrifugation and filtration before the desolventization step (f), optionally by a scraper centrifuge or a disc centrifuge.

9. The method according to any one of claims 1 to 8, wherein in step (e) and step (f), the ester solvent is selected from an organic solvent that has a boiling point greater than 70°C, preferably greater than 80°C, and preferably 100°C-130°C and is insoluble in water;
optionally, the ester solvent contains a carbonate solvent comprising ethylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate or a mixture of two or more thereof;
optionally, the ester solvent contains a carboxylate solvent comprising propyl acetate, methyl propionate, ethyl propionate, propyl propionate, methyl butyrate, ethyl butyrate or a mixture of two or more; and
further optionally, the ester solvent is selected from at least one of ethyl methyl carbonate, dimethyl carbonate or diethyl carbonate.

10. The method according to any one of claims 1 to 9, wherein temperature of the evaporation in the alkalinization step (d) is controlled to be 30°C-40°C, optionally 30°C-35°C; and/or, temperature of the evaporation in the dehydration step (e) is controlled to be 40°C-55°C, optionally 45°C-50°C; and/or, temperature of the evaporation in the desolventization step (f) is controlled to be 60°C-80°C, optionally 65°C-75°C;
and/or
wherein in step (d), step (e) and step (f), the lithium hydroxide aqueous solution is added so that a pH of the mixture in the evaporator is maintained in a range of 7-9, preferably a range of 8-9;
and/or
wherein in step (d), step (e) and step (f), a concentration of the lithium hydroxide aqueous solution is 1 mol/L to 15 mol/L, optionally 2 mol/L to 10 mol/L;
and/or
wherein between step (g) and step (h), the method comprises pumping a stream containing the ester solvent, the dichloromethane and the lithium bis(fluorosulfonyl)imide crystals obtained through the crystallization step (g) into a two-in-one device with filtering and washing functions, wherein a crystallization liquid containing diethyl carbonate and dichloromethane is delivered for recovery treatment, and the remaining lithium bis(fluorosulfonyl)imide crystals fall into a drying kettle on the lower layer of the two-in-one device by gravity;
and/or
wherein in step (h), a liquid phase obtained after drying and condensation comprises dichloromethane and water, and the liquid phase is recycled and delivered to the crystallization step (g);
and/or
wherein a water content of the dichloromethane used in the crystallization step (g) is ≤200 ppm.

11. The method according to any one of claims 1 to 10, wherein the method further comprises (i) a canning step after the drying step (h), wherein after dissolution with a solvent and optionally acid removal, water removal and filtration, the powered lithium bis(fluorosulfonyl)imide crystals obtained in step (h) meet the following criteria: HF is ≤50 µg/g, and a water content is ≤20 µg/g.

12. The method according to claim 11, wherein the solvent used in the dissolution in step (i) is the same as the ester solvents used in step (e) and step (f).

## Patentansprüche

1. Verfahren zur Herstellung von Lithiumbis(fluorsulfonyl)imid, umfassend die folgenden Schritte:
(a) einen Syntheseschritt: Unterwerfen von Sulfurylfluorid, Ammoniakgas und Triethylamin an eine Reaktion in einem Reaktionskessel in Gegenwart eines Lösungsmittels, um einen Strom α1 zu erhalten, der (SO₂F-NH-SO₂F)·Et₃N, ein Triethylamin-Fluorwasserstoffsalz und Triethylamin enthält;
(b) einen Verdampfungsschritt: Durchführen von Verdampfung an dem Strom α1, um einen Strom α2 zu erhalten, der (SO₂F-NH-SO₂F)·Et₃N und das Triethylamin-Fluorwasserstoffsalz enthält, gegebenenfalls Durchführen von Nachbehandlung an dem verdampften Lösungsmittel und dem Triethylamin und dann Rückführen zu Schritt (a);
(c) einen Extraktionsschritt: Waschen des bei Schritt (b) erhaltenen Stroms α2 mit Wasser in einem Extraktionsturm oder einem statischen Mischer, um eine Ölphase α3, die (SO₂F-NH-SO₂F)·Et₃N enthält, und eine wässrige Phase α_{Wasser}, die das Triethylamin-Fluorwasserstoffsalz enthält, zu erhalten, und Abtrennen der Ölphase α3;
(d) einen Alkalisierungsschritt: Zuführen der bei Schritt (c) erhaltenen Ölphase α3 zu einem Verdampfer, um mit einer wässrigen Lithiumhydroxidlösung gemischt zu werden, um einen Gemischstrom β1-1 zu erhalten, und dann Durchführen von Verdampfung bei vermindertem Druck an dem Strom β1-1, um einen Strom β1-2 zu erhalten, der Lithiumbis(fluorsulfonyl)imid enthält;
(e) einen Dehydratisierungsschritt: Zugeben des Stroms β1-2, der das Lithiumbis(fluorsulfonyl)imid und ein Esterlösungsmittel enthält, zu einem Verdampfer zur Verdampfung, um einen Strom β2 zu erhalten, der Lithiumbis(fluorsulfonyl)imid enthält;
(f) einen Desolvatisierungsschritt: Zugeben des bei Schritt (e) erhaltenen Stroms β2 und eines Esterlösungsmittels zu einem Verdampfer zur Verdampfung, um rohes Lithium-bis(fluorsulfonyl)imid β3 zu erhalten; und
(g) einen Kristallisationsschritt: Pumpen des bei Schritt (f) erhaltenen rohen Lithiumbis(fluorsulfonyl)imids β3 in einen Kristallisationskessel und Zugeben von Dichlormethan, um Lithiumbis(fluorsulfonyl)imid-Kristalle zu präzipitieren.

2. Verfahren nach Anspruch 1, wobei das Verfahren ferner den folgenden Schritt umfasst:
(h) einen Trocknungsschritt: Spülen der bei Schritt (g) präzipitierten Lithiumbis(fluorsulfonyl)imid-Kristalle mit einem Inertgas in einem Trockner, um pulverförmige Lithiumbis(fluorsulfonyl)imid-Kristalle mit einem Wassergehalt von weniger als 50 ppm zu erhalten.

3. Verfahren nach einem der Ansprüche 1 bis 2, wobei bei Schritt (a) ein Molverhältnis von Sulfurylfluorid: Ammoniakgas: Triethylamin (1,5-3,5):1:(1-6), gegebenenfalls (2-3):1:(1-5), beträgt.

4. Verfahren nach einem der Ansprüche 1 bis 3, wobei bei Schritt (a) das Lösungsmittel ausgewählt ist aus Acetonitril, Propionitril, Isopropionitril, Diethylether, Propylether, Isopropylether, Tetrahydrofuran, Aceton, Butanon, Methylisobutylketon, Methylpyrrolidon oder einem Gemisch von zwei oder mehreren davon, vorzugsweise Acetonitril.

5. Verfahren nach einem der Ansprüche 1 bis 4, wobei bei Schritt (a) die Reaktionstemperatur der Reaktion nicht höher als 25 °C ist, gegebenenfalls 3 °C bis 20°C beträgt; und/oder der Reaktionsdruck der Reaktion nicht höher als 0,4 MPa, gegebenenfalls nicht höher als 0,25 MPa, ist.

6. Verfahren nach einem der Ansprüche 1 bis 5, wobei zwischen Schritt (a) und Schritt (b) das Verfahren ferner einen Schritt des Filtrierens des Stroms α1 umfasst, um einen Nebenprodukt-Sulfonamidfeststoff zu entfernen, wobei gegebenenfalls der Schritt des Filtrierens das Durchführen von Filtration unter Verwendung eines Tetrafluor-Filterbeutels mit einem Porendurchmesser von 5 µm bis 20 µm umfasst;
und/oder
wobei bei Schritt (b) der Strom α1 unter Verwendung eines Fallfilmverdampfers verdampft wird; und/oder
wobei bei Schritt (c) die wässrige Phase α_{Wasser}, die das Triethylamin-Fluorwasserstoffsalz enthält, Recyclingbehandlung zugeführt wird und Triethylamin, das erhalten wird, nachdem die wässrige Phase α_{Wasser} einer Alkalisierung und Reinigungsbehandlung unterzogen wurde, recyclingfähig ist; und/oder
wobei bei Schritt (d) die Ölphase α3 mit der wässrigen Lithiumhydroxidlösung gemischt und zur Reaktion für 0,5-3 Stunden, gegebenenfalls 1-2 Stunden, gerührt wird;
und/oder
wobei bei Schritt (d) ein Kondensat, das durch Verdampfen des Stroms β1-1 erhalten wird, stehender Flüssigkeitstrennung unterzogen wird, eine Flüssigkeit der oberen Schicht eine wässrige Triethylaminlösung ist und die Flüssigkeit der oberen Schicht Recyclingbehandlung zugeführt wird; und eine Flüssigkeit der unteren Schicht kondensiertes Wasser ist und die Flüssigkeit der unteren Schicht rückgeführt wird, um die für den Alkalisierungsschritt benötigte wässrige Lithiumhydroxidlösung herzustellen.

7. Verfahren nach einem der Ansprüche 1 bis 6, wobei bei Schritt (d) ein Volumenverhältnis der Ölphase α3 zu der wässrigen Lithiumhydroxidlösung (0,8-5):1, gegebenenfalls (1-1,2):1, beträgt;
und/oder
wobei bei Schritt (e) und Schritt (f) eine wässrige Lösung des durch Kondensation erhaltenen Esterlösungsmittels Recyclingbehandlung zugeführt wird;
und/oder
wobei bei Schritt (e) der erhaltene Strom β2 0,1 Vol.-% bis 2 Vol.-% an dem Wasser und 20 Vol.-% bis 40 Vol.-% an dem Esterlösungsmittel enthält.

8. Verfahren nach einem der Ansprüche 1 bis 7, wobei das bei Schritt (f) erhaltene rohe Lithiumbis(fluorsulfonyl)imid β3 einen Wassergehalt von 2000 ppm bis 4000 ppm, vorzugsweise einen Wassergehalt von 2300 ppm bis 2800 ppm, aufweist;
und/oder
wobei Schritt (e) und Schritt (f) in dem gleichen Verdampfer durchgeführt werden oder Schritt (e) und Schritt (f) in verschiedenen Verdampfern durchgeführt werden;
und/oder
wobei bei Schritt (d) und Schritt (e) eine folgende Nebenreaktion stattfindet:
(SO₂F-N-SO₂F)⁻Li⁺+4LiOH→NH₂SO₃Li+Li₂SO₄+2LiF+H₂O,
und
eine Nebenprodukt-Lithiumverbindung vor dem Desolvatisierungsschritt (f) durch Zentrifugation und Filtration, gegebenenfalls durch eine Schaberzentrifuge oder eine Scheibenzentrifuge, entfernt wird.

9. Verfahren nach einem der Ansprüche 1 bis 8, wobei bei Schritt (e) und Schritt (f) das Esterlösungsmittel aus einem organischen Lösungsmittel ausgewählt ist, das einen Siedepunkt von höher als 70 °C, vorzugsweise höher als 80 °C und vorzugsweise 100 °C bis 130°C aufweist und in Wasser unlöslich ist;
wobei gegebenenfalls das Esterlösungsmittel ein Carbonatlösungsmittel umfassend Ethylencarbonat, Ethylmethylcarbonat, Diethylcarbonat, Dimethylcarbonat, Dipropylcarbonat, Methylpropylcarbonat, Ethylenpropylcarbonat, Butylencarbonat, Fluorethylencarbonat oder ein Gemisch aus zwei oder mehreren davon enthält;
wobei gegebenenfalls das Esterlösungsmittel ein Carboxylatlösungsmittel umfassend Propylacetat, Methylpropionat, Ethylpropionat, Propylpropionat, Methylbutyrat, Ethylbutyrat oder ein Gemisch aus zwei oder mehreren enthält; und
ferner gegebenenfalls das Esterlösungsmittel ausgewählt ist aus wenigstens einem von Ethylmethylcarbonat, Dimethylcarbonat und Diethylcarbonat.

10. Verfahren nach einem der Ansprüche 1 bis 9, wobei die Temperatur der Verdampfung bei dem Alkalisierungsschritt (d) auf 30 °C bis 40 °C, gegebenenfalls 30 °C bis 35 °C, geregelt wird; und/oder die Temperatur der Verdampfung bei dem Dehydratisierungsschritt (e) auf 40 °C bis 55 °C, gegebenenfalls 45 °C bis 50 °C, geregelt wird; und/oder die Temperatur der Verdampfung bei dem Desolvatisierungsschritt (f) auf 60 °C bis 80 °C, gegebenenfalls 65 °C bis 75 °C, geregelt wird;
und/oder
wobei bei Schritt (d), Schritt (e) und Schritt (f) die wässrige Lithiumhydroxidlösung zugegeben wird, so dass ein pH-Wert des Gemischs in dem Verdampfer in einem Bereich von 7-9, vorzugsweise einem Bereich von 8-9, gehalten wird;
und/oder
wobei bei Schritt (d), Schritt (e) und Schritt (f) eine Konzentration der wässrigen Lithiumhydroxidlösung 1 mol/l bis 15 mol/l, gegebenenfalls 2 mol/l bis 10 mol/l, beträgt;
und/oder
wobei das Verfahren zwischen Schritt (g) und Schritt (h) Pumpen eines Stroms, der das Esterlösungsmittel, das Dichlormethan und die bei dem Kristallisationsschritt (g) erhaltenen Lithiumbis(fluorsulfonyl)imid-Kristalle enthält, in eine Zwei-in-Eins-Vorrichtung mit Filter- und Waschfunktionen umfasst, wobei eine Kristallisationsflüssigkeit, die Diethylcarbonat und Dichlormethan enthält, Rückgewinnungsbehandlung zugeführt wird und die verbleibenden Lithiumbis(fluorsulfonyl)imid-Kristalle durch Schwerkraft in einen Trocknungskessel in der unteren Schicht der Zwei-in-Eins-Vorrichtung fallen;
und/oder
wobei bei Schritt (h) eine nach Trocknen und Kondensation erhaltene flüssige Phase Dichlormethan und Wasser umfasst und die flüssige Phase rückgeführt und dem Kristallisationsschritt (g) zugeführt wird;
und/oder
wobei ein Wassergehalt des bei dem Kristallisationsschritt (g) eingesetzten Dichlormethans ≤200 ppm beträgt.

11. Verfahren nach einem der Ansprüche 1 bis 10, wobei das Verfahren ferner (i) einen Eindosungsschritt nach dem Trocknungsschritt (h) umfasst, wobei die bei Schritt (h) erhaltenen aktivierten Lithium-bis(fluorsulfonyl)imid-Kristalle nach Auflösen mit einem Lösungsmittel und gegebenenfalls Säure entfernung, Wasserentfernung und Filtration die folgenden Kriterien erfüllen: HF beträgt ≤50 µg/g und ein Wassergehalt beträgt ≤20 µg/g.

12. Verfahren nach Anspruch 11, wobei das bei der Auflösung bei Schritt (i) verwendete Lösungsmittel das gleiche ist wie die bei Schritt (e) und Schritt (f) verwendeten Esterlösungsmittel.

## Revendications

1. Procédé de préparation de bis(fluorosulfonyl)imidure de lithium, comprenant les étapes suivantes :
(a) une étape de synthèse : soumettre le fluorure de sulfuryle, l'ammoniac gazeux et la triéthylamine à une réaction dans un réacteur à cuve en présence d'un solvant pour obtenir un flux α1 contenant (SO₂F-NH-SO₂F)·Et₃N, un sel de fluorure d'hydrogène de triéthylamine et de la triéthylamine ;
(b) une étape d'évaporation : réaliser l'évaporation du flux α1 pour obtenir un flux α2 contenant (SO₂F-NH-SO₂F)·Et₃N et le sel de fluorure d'hydrogène de triéthylamine, réaliser un post-traitement sur le solvant évaporé et la triéthylamine éventuellement, puis revenir à l'étape (a) ;
(c) une étape d'extraction : laver le flux α2 obtenu à l'étape (b) avec de l'eau dans une tour d'extraction ou un mélangeur statique pour obtenir une phase huileuse α3 contenant (SO₂F-NH-SO₂F)·Et₃N et une phase aqueuse αₑₐᵤ contenant le sel de fluorure d'hydrogène de triéthylamine, et séparer la phase huile α3 ;
(d) une étape d'alcalinisation : introduire la phase huileuse α3 obtenue à l'étape (c) dans un évaporateur pour qu'elle soit mélangée avec une solution aqueuse d'hydroxyde de lithium afin d'obtenir un flux de mélange β1-1, puis réaliser une évaporation à pression réduite sur le flux β1-1 pour obtenir un flux β1-2 contenant du bis(fluorosulfonyl)imidure de lithium ;
(e) une étape de déshydratation : ajouter le flux β1-2 contenant le bis(fluorosulfonyl)imidure de lithium et un solvant ester dans un évaporateur pour évaporation afin d'obtenir un flux β2 contenant du bis(fluorosulfonyl)imidure de lithium ;
(f) une étape de désolvatation : ajouter le flux β2 obtenu à l'étape (e) et un solvant ester dans un évaporateur pour évaporation afin d'obtenir du bis(fluorosulfonyl)imidure de lithium β3 brut ; et
(g) une étape de cristallisation : pompage du bis(fluorosulfonyl)imidure de lithium brut β3 obtenu à l'étape (f) dans une cuve de cristallisation, et ajouter du dichlorométhane pour précipiter des cristaux de bis(fluorosulfonyl)imidure de lithium.

2. Procédé selon la revendication 1, dans lequel le procédé comprend en outre l'étape suivante :
(h) une étape de séchage : purger avec un gaz inerte les cristaux de bis(fluorosulfonyl)imidure de lithium précipités à l'étape (g) dans un séchoir, pour obtenir des cristaux de bis(fluorosulfonyl)imidure de lithium en poudre ayant une teneur en eau inférieure à 50 ppm.

3. Procédé selon l'une quelconque des revendications 1 à 2, dans lequel, dans l'étape (a), un rapport molaire fluorure de sulfuryle : ammoniac gazeux : triéthylamine est (1,5 à 3,5) : 1 : (1 à 6), éventuellement (2 à 3) : 1 : (1 à 5).

4. Procédé selon l'une quelconque des revendications 1 à 3, dans lequel dans l'étape (a), le solvant est choisi parmi l'acétonitrile, le propionitrile, l'isopropionitrile, l'éther diéthylique, l'éther propylique, l'isopropyléther, le tétrahydrofurane, l'acétone, la butanone, la méthylisobutylcétone, la méthylpyrrolidone ou un mélange de deux quelconques de ceux-ci ou plus, de préférence l'acétonitrile.

5. Procédé selon l'une quelconque des revendications 1 à 4, dans lequel, dans l'étape (a), la température réactionnelle de la réaction n'est pas supérieure à 25°°C, éventuellement de 3 °C à 20 °C ; et/ou la pression réactionnelle de la réaction n'est pas supérieure à 0,4 MPa, éventuellement pas supérieure à 0,25 MPa.

6. Procédé selon l'une quelconque des revendications 1 à 5, dans lequel entre l'étape (a) et l'étape (b), le procédé comprend en outre une étape de filtration du flux α1 pour éliminer un sous-produit solide sulfonamide, éventuellement, l'étape de filtration comprend la réalisation d'une filtration en utilisant un sac filtrant tétrafluoro ayant un diamètre de pore de 5 µm à 20 µm ;
et/ou
dans lequel à l'étape (b), le flux α1 est évaporé en utilisant un évaporateur à film tombant ;
et/ou
dans lequel, dans l'étape (c), la phase aqueuse αₑₐᵤ contenant le sel de fluorure d'hydrogène de triéthylamine est introduite dans le traitement de recyclage, et la triéthylamine obtenue après que la phase aqueuse αₑₐᵤ a été soumise à un traitement d'alcalinisation et de purification est recyclable ;
et/ou
dans lequel dans l'étape (d), la phase huileuse α3 est mélangée et agitée avec la solution aqueuse d'hydroxyde de lithium pour réaction pendant 0,5 à 3 heures, éventuellement 1 à 2 heures ;
et/ou
dans lequel, dans l'étape (d), un condensat obtenu par évaporation du flux β1-1 est soumis à une séparation de liquides au repos, un liquide de couche supérieure est une solution aqueuse de triéthylamine, et le liquide de couche supérieure est introduit dans un traitement de recyclage ; et un liquide de couche inférieure est de l'eau condensée, et le liquide de couche inférieure est recyclé pour préparer la solution aqueuse d'hydroxyde de lithium exigée pour l'étape d'alcalinisation.

7. Procédé selon l'une quelconque des revendications 1 à 6, dans lequel, dans l'étape (d), un rapport volumique de la phase huileuse α3 à la solution aqueuse d'hydroxyde de lithium est (0,8 à 5) : 1, éventuellement (1 à 1,2) : 1 ;
et/ou
dans lequel dans l'étape (e) et l'étape (f), une solution aqueuse du solvant ester obtenue par condensation est fournie pour un traitement de recyclage ;
et/ou
dans lequel dans l'étape (e), le flux obtenu β2 contient 0,1 % en volume à 2 % en volume de l'eau et 20 % en volume à 40 % en volume du solvant ester.

8. Procédé selon l'une quelconque des revendications 1 à 7, dans lequel le bis(fluorosulfonyl)imidure de lithium brut β3 obtenu dans l'étape (f) a une teneur en eau de 2000 ppm à 4000 ppm, de préférence une teneur en eau de 2300 ppm à 2800 ppm ;
et/ou
dans lequel l'étape (e) et l'étape (f) sont réalisées dans un même évaporateur, ou l'étape (e) et l'étape (f) sont réalisées dans des évaporateurs différents ;
et/ou
dans lequel, lors de l'étape (d) et de l'étape (e), une réaction secondaire suivante se produit :
(SO₂F-N-SO₂F)⁻Li⁺ + 4LiOH → NH₂SO₃Li + Li₂SO₄ + 2LiF + H₂O,
et
un sous-produit composé lithien est éliminé par centrifugation et filtration avant l'étape (f) de désolvatation, éventuellement par une centrifugeuse à racloir ou une centrifugeuse à disques.

9. Procédé selon l'une quelconque des revendications 1 à 8, dans lequel dans l'étape (e) et l'étape (f), le solvant ester est choisi parmi un solvant organique qui possède un point d'ébullition supérieur à 70 °C, de préférence supérieur à 80 °C, et de préférence 100 °C à 130 °C et qui est insoluble dans l'eau ;
éventuellement, le solvant ester contient un solvant carbonate comprenant le carbonate d'éthylène, le carbonate d'éthylméthyle, le carbonate de diéthyle, le carbonate de diméthyle, le carbonate de dipropyle, le carbonate de méthylpropyle, le carbonate d'éthylène et de propyle, le carbonate de butylène, le carbonate de fluoroéthylène ou un mélange de deux de ceux-ci ou plus ;
éventuellement, le solvant ester contient un solvant carboxylate comprenant l'acétate de propyle, le propionate de méthyle, le propionate d'éthyle, le propionate de propyle, le butyrate de méthyle, le butyrate d'éthyle ou un mélange de deux de ceux-ci ou plus ; et
en outre éventuellement, le solvant ester est choisi parmi au moins l'un parmi le carbonate d'éthylméthyle, le carbonate de diméthyle ou le carbonate de diéthyle.

10. Procédé selon l'une quelconque des revendications 1 à 9, dans lequel la température de l'évaporation dans l'étape (d) d'alcalinisation est régulée pour être de 30 °C à 40 °C, éventuellement de 30 °C à 35 °C ; et/ou la température de l'évaporation dans l'étape (e) de déshydratation est régulée pour être de 40 *°C à* 55 °C, éventuellement de 45 °C à 50 °C ; et/ou la température de l'évaporation dans l'étape (f) de désolvatation est régulée pour être de 60 °C à 80 °C, éventuellement de 65 °C à 75 °C ;
et/ou
dans lequel, dans l'étape (d), l'étape (e) et l'étape (f), la solution aqueuse d'hydroxyde de lithium est ajoutée de telle sorte qu'un pH du mélange dans l'évaporateur est maintenu dans une plage de 7 à 9, de préférence dans une plage de 8 à 9 ;
et/ou
dans lequel dans l'étape (d), l'étape (e) et l'étape (f), une concentration de la solution aqueuse d'hydroxyde de lithium est de 1 mol/l à 15 mol/l, éventuellement de 2 mol/l à 10 mol/l ;
et/ou
dans lequel entre l'étape (g) et l'étape (h), le procédé comprend le pompage d'un flux contenant le solvant ester, le dichlorométhane et les cristaux de bis(fluorosulfonyl)imidure de lithium obtenus par l'étape (g) de cristallisation dans un dispositif deux-en-un à fonctions de filtration et de lavage, dans lequel un liquide de cristallisation contenant du carbonate de diéthyle et du dichlorométhane est introduit dans un traitement de récupération, et les cristaux de bis(fluorosulfonyl)imidure de lithium restants tombent par gravité dans une cuve de séchage sur la couche inférieure du dispositif deux-en-un ;
et/ou
dans lequel, dans l'étape (h), une phase liquide obtenue après séchage et condensation comprend du dichlorométhane et de l'eau, et la phase liquide est recyclée et introduite dans l'étape (g) de cristallisation ;
et/ou
dans lequel une teneur en eau du dichlorométhane utilisé dans l'étape (g) de cristallisation est ≤ 200 ppm.

11. Procédé selon l'une quelconque des revendications 1 à 10, dans lequel le procédé comprend en outre (i) une étape de mise en boîte après l'étape (h) de séchage, dans lequel, après dissolution avec un solvant et éventuellement élimination d'acide, élimination d'eau et filtration, les cristaux de bis(fluorosulfonyl)imidure de lithium en poudre obtenus dans l'étape (h) satisfont aux critères suivants : HF est ≤ 50 µg/g, et une teneur en eau est ≤ 20 µg/g.

12. Procédé selon la revendication 11, dans lequel le solvant utilisé dans la dissolution de l'étape (i) est le même que les solvants ester utilisés dans l'étape (e) et l'étape (f).
